# EUROPEAN PATENT APPLICATION

(11) **EP 4 657 548 A1**
(43) Date of publication of application: **03.12.2025**
(21) Application number: 25179045.7
(22) Date of filing: 27.05.2025
(51) Int. Cl.: H01M 4/133, H01M 4/583, H01M 4/587, H01M 4/36, H01M 4/62, H01M 10/0525, H01M 4/02

(54) **NEGATIVE ELECTRODE ACTIVE MATERIAL, NEGATIVE ELECTRODE INCLUDING THE NEGATIVE ELECTRODE ACTIVE MATERIAL, RECHARGEABLE LITHIUM BATTERY INCLUDING THE NEGATIVE ELECTRODE, AND METHOD OF PREPARING THE NEGATIVE ELECTRODE ACTIVE MATERIAL**

(30) Priority: 27.05.2024 KR 20240068802
(71) Applicant: SAMSUNG SDI CO., LTD., Yongin-si, Gyeonggi-do 17084 (KR)
(72) Inventor: YOUM, Chul, 17084 Yongin-si (KR)
(74) Representative: Marks & Clerk LLP

(57) **Abstract**

A negative electrode active material includes a core containing a first amorphous carbon and a shell on the core. The shell includes a first shell on the core, with the first shell including a crystalline carbon. The shell also includes a second shell on the first shell, with the second shell including a second amorphous carbon. A ratio of a D/G value of the core to a D/G value of the shell including the first shell and the second shell is about 1.4 to about 15.

## Description

### BACKGROUND

The present disclosure relates to a negative electrode active material, a negative electrode including the negative electrode active material, a rechargeable lithium battery including the negative electrode active material, and a method for preparing the negative electrode active material.

The rapid spread of battery-powered devices, such as mobile phones, laptop computers, and electric vehicles, has caused a sharp rise in demand for rechargeable batteries provided with high energy density and high capacity. Extensive research efforts have therefore been directed towards improving the performance of rechargeable lithium batteries.

Rechargeable lithium batteries include a positive electrode and a negative electrode, each of which includes an active material that allows intercalation and deintercalation of lithium ions, and an electrolyte solution. The batteries produce electrical energy from redox reactions that take place as lithium ions are intercalated into or deintercalated from the positive electrode and the negative electrode.

### SUMMARY

The present disclosure provides a negative electrode active material capable of preventing structural collapse of a negative electrode active material during roll pressing and producing a high-density negative electrode plate, and a method of preparing the negative electrode active material.

The present disclosure also provides a high-density negative electrode.

The present disclosure also provides a rechargeable lithium battery having excellent capacity, efficiency, and quick charging performance.

An embodiment of the present disclosure provides a negative electrode active material including a core including a first amorphous carbon and a shell on the core, wherein the shell includes a first shell on the core, with the first shell including a crystalline carbon, and a second shell on the first shell, with the second shell including a second amorphous carbon, and a ratio of a D/G value of the core to a D/G value of the shell including the first shell and the second shell is about 1.4 to about 15.

In an embodiment of the present disclosure, a negative electrode includes a negative electrode current collector and a negative electrode active material layer, wherein the negative electrode active material layer includes the negative electrode active material described above.

In an embodiment of the present disclosure, a rechargeable lithium battery includes the negative electrode described above.

In an embodiment of the present disclosure, a method of preparing a negative electrode active material includes preparing amorphous carbon, mixing the amorphous carbon, a hard carbon raw material, and a metal compound to prepare a mixture, and graphitizing the mixture at about 1000 °C to about 1500 °C.

At least some of the above and other features of the invention are set out in the claims.

### BRIEF DESCRIPTION OF THE FIGURES

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:
FIG. 1 is a simplified conceptual view showing a rechargeable lithium battery according to embodiments of the present disclosure;
FIGS. 2 to 5 are schematic views showing a rechargeable lithium battery according to an embodiment, and FIG. 2 shows a cylindrical battery, FIG. 3 shows a prismatic battery, and FIGS. 4 and 5 show pouch-type batteries;
FIG. 6 is a cross-sectional view showing a negative electrode for a rechargeable lithium battery according to embodiments of the present disclosure;
FIG. 7 is a cross-sectional view for describing a negative electrode active material according to embodiments of the present disclosure;
FIG. 8 is an enlarged view showing region M of FIG. 7;
FIG. 9 is a flowchart for describing a method for preparing a negative electrode active material according to embodiments of the present disclosure; and
FIGS. 10 and 11 are each a schematic view for describing each process of the method for preparing a negative electrode active material above.

### DETAILED DESCRIPTION

In order to sufficiently understand the configuration and effects of the present disclosure, preferred embodiments of the present disclosure will be described with reference to the accompanying drawings. It should be noted, however, that the present disclosure is not limited to the following embodiments and may be implemented in various forms and variously modified. The embodiments herein are provided so that present disclosure will be thorough and complete and will fully convey the scope of the present disclosure to those skilled in the art.

Herein, it will be understood that when a component is referred to as being on another component, the component may be directly on another component, or an intervening third component may be present. In addition, in the drawings, thicknesses of components are exaggerated for effectively describing technical contents. Like reference numerals refer to like elements throughout.

Unless otherwise specified herein, the expression of singular form may include the expression of plural form. In addition, unless otherwise specified, the phrase "A or B" may indicate "A but not B", "B but not A", or "A and B". The terms "comprises" and/or "comprising" used herein do not exclude the presence or addition of one or more other components.

As used herein, the term "combination thereof" may refer to a mixture, a stack, a composite, a copolymer, an alloy, a blend, or a reaction product.

Unless otherwise defined herein, a particle diameter may be an average particle diameter. In addition, a particle diameter may be defined as an average particle diameter (D50) indicating the diameter of particles at a cumulative volume of about 50 vol% in particle size distribution. The average particle diameter (D50) may be measured by a method widely known to those skilled in the art, for example, by a particle size analyzer, an image of transmission electron microscope (TEM), or an image of scanning electron microscope (SEM). Alternatively, the average particle diameter (D50) may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter. In the measuring using the laser diffraction method, more specifically, target particles are dispersed in a dispersion medium, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

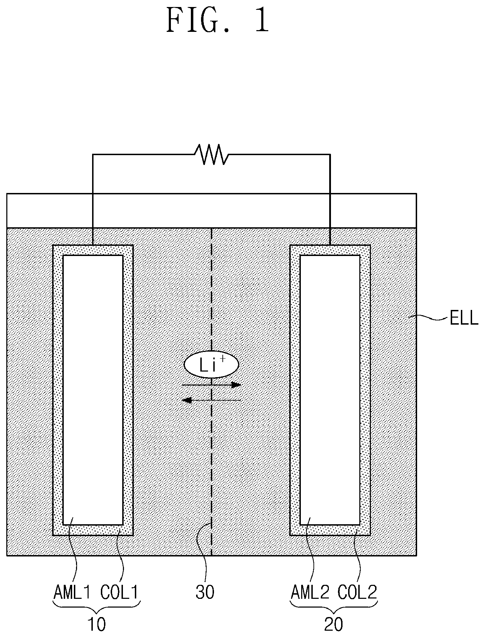

FIG. 1 is a simplified conceptual view showing a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

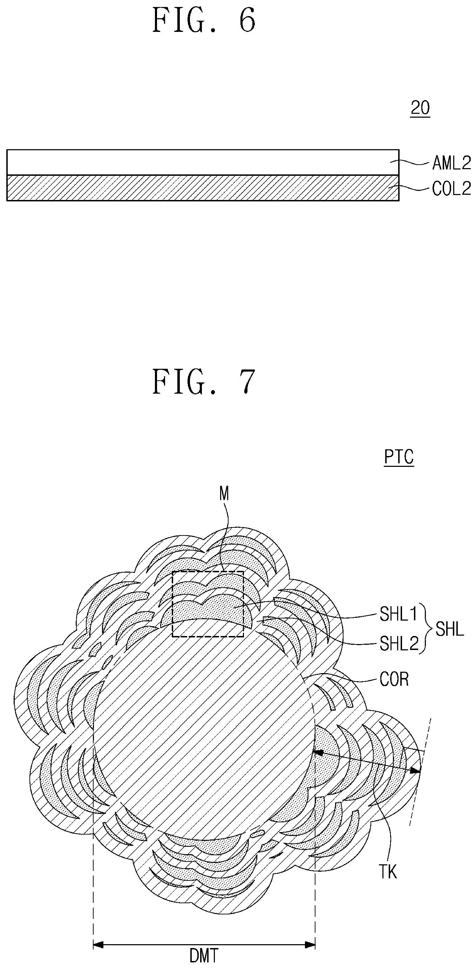

The negative electrode 20 will be described later with reference to FIG. 6.

### Positive Electrode

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive material. The positive electrode 10 may also include an additive capable of serving as a sacrificial positive electrode.

The positive electrode active material layer AML1 may contain about 90 wt% to about 99.5 wt% of the positive electrode active material with respect to 100 wt% of the positive electrode active material layer AML1. With respect to 100 wt% of the positive electrode active material layer AML1, the binder and the conductive material may each amount to about 0.5 wt% to about 5 wt%.

The binder may serve to attach positive electrode active material particles to one another and also to attach the positive electrode active material to the current collector COL1. Typical examples of the binder are at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But embodiments of the present disclosure are not limited to these examples.

The conductive material may be used to impart conductivity to the electrode. Any material that does not cause chemical changes and is an electron conductive material may be usable in batteries. Examples of the conductive material are a carbon-based material such as natural graphite, artificial graphite, carbon black, acetylene black, ketjen black, a carbon fiber, a carbon nanofiber, and a carbon nanotube (single-walled carbon nanotube (SWCNT) or multi-walled carbon nanotube (CNT)); a metal-based material including copper, nickel, aluminium, silver, and the like in a form of a metal powder or a metal fiber; a conductive polymer such as a polyphenylene derivative; or a mixture thereof.

Al may be used as the current collector COL1, but embodiments of the present disclosure is not limited thereto.

An area of the current collector COL1 may be substantially the same as an area of the positive electrode active material layer AML1. Herein, substantially the same area may indicate a less than about 10% difference between the two areas. In other examples, an area of the current collector COL1 may be different from an area of the positive electrode active material layer AML1. Herein, different areas may indicate a greater than about 10% difference between the two areas. In an embodiment, an area of the current collector COL1 may be greater than an area of the positive electrode active material layer AML1.

### Positive Electrode Active Material

A compound capable of reversibly intercalating and deintercalating lithium (lithiated intercalation compound) may be used as a positive electrode active material in a positive electrode active material layer AML1. Specifically, at least one of a complex oxide of lithium and a metal selected from cobalt, manganese, nickel, and a combination thereof may be used.

The complex oxide may be a lithium transition metal complex oxide. Specific examples thereof include lithium nickel-based oxide, lithium cobalt-based oxide, lithium manganese-based oxide, lithium iron phosphate-based compound, cobalt-free lithium nickel-manganese-based oxide, or a combination thereof.

For example, a compound represented by any one among the formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8). In these formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be a high nickel-based positive electrode active material having a nickel content of about 80 mol% or greater, about 85 mol% or greater, about 90 mol% or greater, about 91 mol% or greater, or about 94 mol% or greater, with respect to 100 mol% of metals in the lithium transition metal complex oxide excluding lithium. The high nickel-based positive electrode active material may achieve high capacity, and, thus, may be applied to high-capacity, high-density rechargeable lithium batteries.

### Separator

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be mixed in one coating layer, or a coating layer including an organic material and a coating layer including an inorganic material may be stacked.

### Electrolyte Solution

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (where R is a C2 to C20 linear, branched, or cyclic hydrocarbon group and may include a double bond, an aromatic ring, or an ether group); amides such as dimethylformamide; dioxolanes such as 1,3-dioxolane, 1,4-dioxolane; sulfolanes, and the like.

The non-aqueous organic solvents may be used alone or in combination of two or more.

In addition, when using a carbonate-based solvent, a cyclic carbonate and a chain carbonate may be mixed and used. The cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Typical examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), lithium difluorobis(oxalato)borate (LiDFBOB), and lithium bis(oxalato)borate (LiBOB).

### Rechargeable Lithium Battery

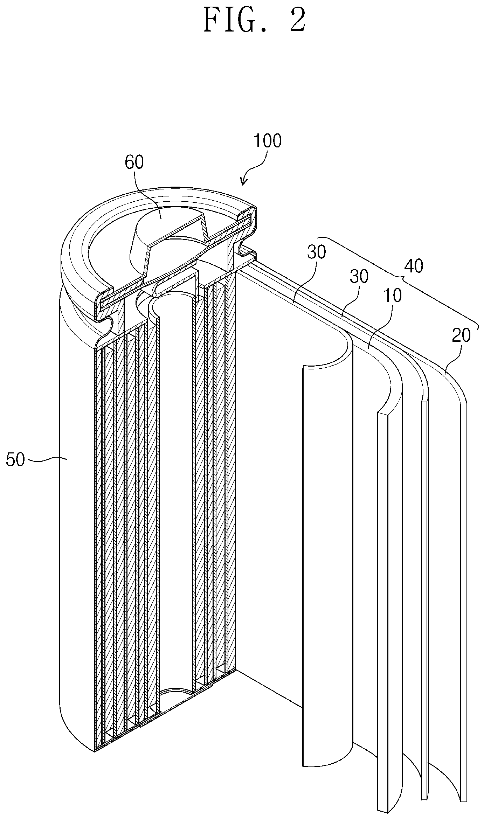

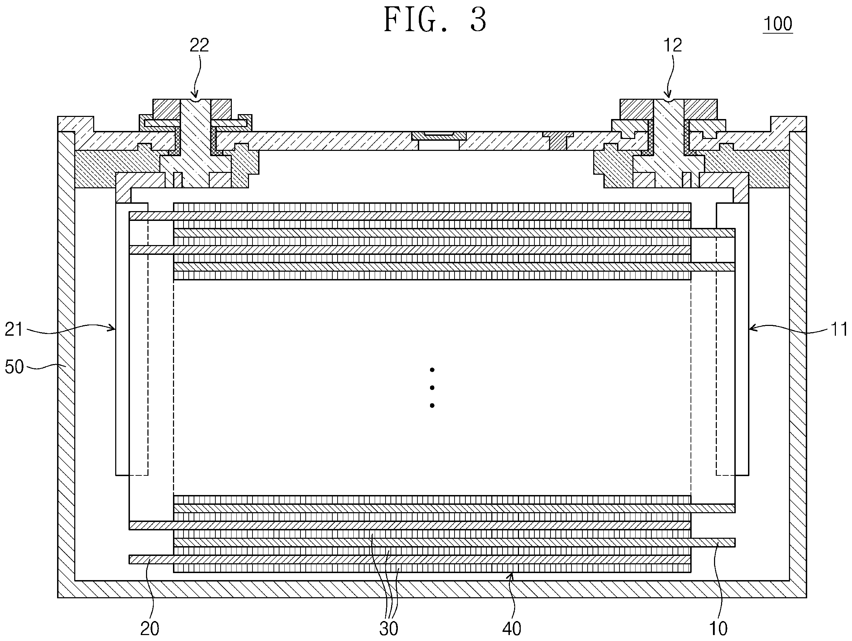

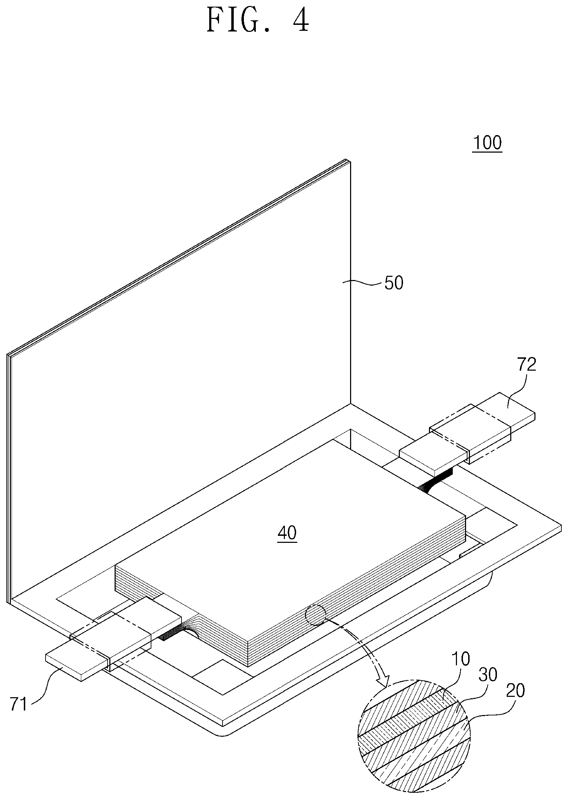

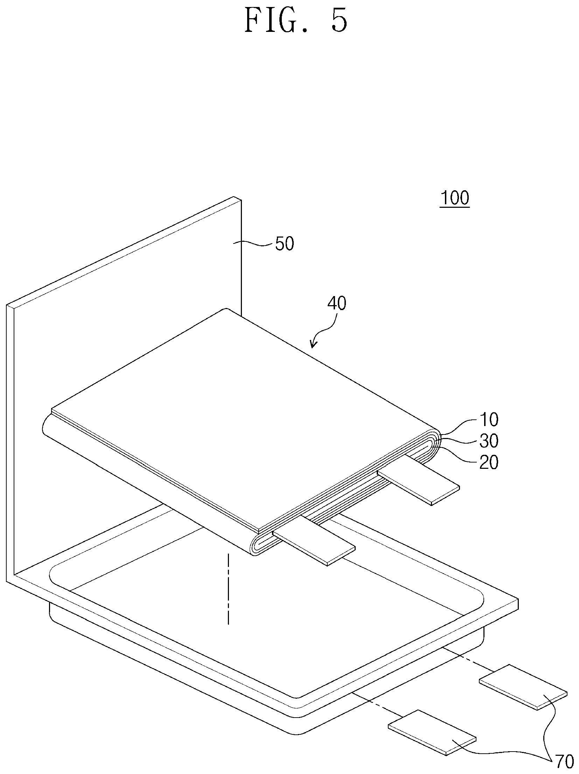

The rechargeable lithium battery may be classified into cylindrical, prismatic, pouch, or coin-type batteries, and the like depending on its shape. FIGS. 2 to 5 are schematic views showing a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. As shown in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, which may be, for example, a positive electrode tab 71 and a negative electrode tab 72, which provide an electrical path for inducing the current formed in the electrode assembly 40 to outside of the battery.

The rechargeable lithium battery according to an embodiment may be used in automobiles, mobile phones, and/or various types of electric devices, as nonlimiting examples.

### Negative Electrode

FIG. 6 is a cross-sectional view showing a negative electrode 20 according to embodiments of the present disclosure. Referring to FIG. 6, the negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material.

The negative electrode active material layer AML2 may include about 90 wt% to about 99.5 wt% or about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity to the electrode. Any material that does not cause chemical changes and is an electron conductive material may be usable in batteries according to embodiments of the present disclosure. Examples of the conductive material may include a carbon-based material such as natural graphite, artificial graphite, carbon black, acetylene black, Ketjen black, a carbon fiber, a carbon nanofiber, and carbon nanotube; a metal-based material including copper, nickel, aluminium, silver, etc., in a form of a metal powder or a metal fiber; a conductive polymer such as a polyphenylene derivative; or a mixture thereof.

The current collector COL2 may be selected from a copper foil, a nickel foil, a stainless steel foil, a titanium foil, a nickel foam, a copper foam, a polymer substrate coated with a conductive metal, or a combination thereof.

An area of the current collector COL2 may be substantially the same as an area of the negative electrode active material layer AML2. As another example, an area of the current collector COL2 may be different from an area of the negative electrode active material layer AML2. For example, an area of the current collector COL2 may be greater than an area of the negative electrode active material layer AML2.

### Negative Electrode Active Material

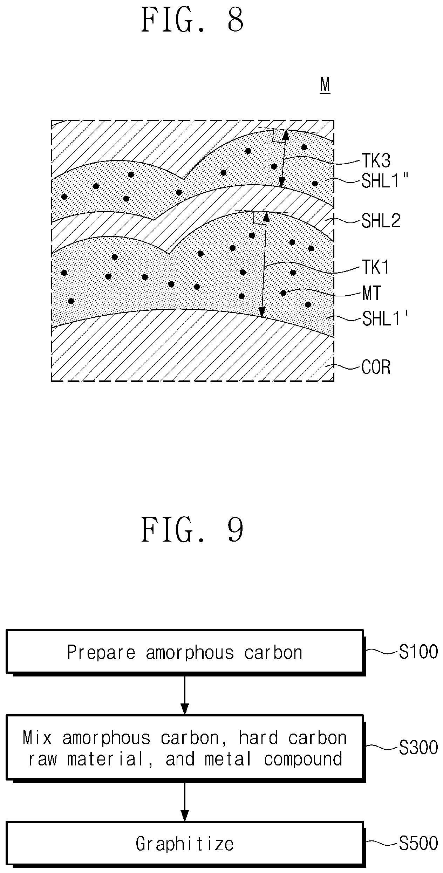

FIG. 7 shows a negative electrode active material according to embodiments of the present disclosure. FIG. 8 is an enlarged view of a shell of a negative electrode active material according to embodiments of the present disclosure. In particular, FIG. 8 is an enlarged view showing region M of FIG. 7.

Referring to FIG. 7, a negative electrode active material PTC according to embodiments of the present disclosure includes a core COR and a shell SHL on the core COR.

The core COR may have a size DMT of about 500 nm to about 20 µm, about 500 nm to about 10 µm, about 1 µm to about 10 µm, about 2 µm to about 5 µm, or about 3 µm to about 5 µm. The size DMT of the core COR may indicate an average diameter value measured by randomly selecting about 30 cores COR in a scanning electron microscope (SEM) image of a negative electrode active material. The diameter may include a major axis and/or a minor axis.

The core COR includes a first amorphous carbon. The first amorphous carbon may include at least one of non-graphitizable carbon (hard carbon) and graphitizable carbon (soft carbon). For example, the term "soft carbon" may refer to graphitizable carbon materials and may be readily graphitized by heat treatment at a high temperature, e.g., 2800 °C, and "hard carbon" may refer to non-graphitizable carbon materials and may be slightly graphitized by heat treatment.

A D band (peak position: around 1350±50 cm⁻¹) and a G band (peak position: around 1580±50 cm⁻¹) may be seen in the Raman spectrum obtained through Raman spectroscopy for carbon. Herein, a D/G value may be defined as a ratio of a maximum peak intensity of the D band to a maximum peak intensity of the G band.

The core COR may have a D/G value of about 1.1 or greater. For example, the core COR may have a D/G value of about 1.1 to about 1.5 or about 1.1 to about 1.3. When the D/G value of the core COR is in these ranges, the core COR may be harder than the shell SHL and the core COR may maintain its shape.

The shell SHL is disposed on the core COR. The shell SHL may have a thickness TK of about 500 nm to about 5 µm. For example, the shell SHL may have a thickness TK of about 500 nm to about 3 µm, about 1 µm to about 5 µm, about 1.5 µm to about 4 µm, or about 2 µm to about 3 µm. The thickness TK of the shell SHL may indicate a value obtained by randomly selecting about 100 negative electrode active materials in an electron micrograph of a negative electrode active material and measuring a thickness of a shell included in each negative electrode active material. The thickness may be defined as the distance between a first point of an outermost portion of a shell and a second point of a border line where a core and a shell are in contact. The first point may be a contact point where the outermost portion of the shell and a tangent line at that point meet. The second point may be a point that meets the border line when a straight line is drawn from the contact point in a normal direction of the tangent line. The range of thickness may indicate a range from a thickness of a thinnest portion to a thickness of a thickest portion.

A ratio of the size DMT of the core COR to the thickness TK of the shell SHL may be about 1 to about 3. For example, the ratio of the size DMT of the core COR to the thickness TK of the shell SHL may be about 1 to about 2.5, or about 1.5 to about 2.5. When the thickness TK of the shell SHL, and the ratio of the size DMT of the core COR to the thickness TK of the shell SHL are in the ranges described above, a negative electrode active material may have improved rollability (rolling property) and electrical conductivity.

The shell SHL may include a plurality of shells. The shell SHL includes a first shell SHL1 and a second shell SHL2. The first shell SHL1 is disposed on the core COR. The second shell SHL2 is disposed on the first shell SHL1.

The first shell SHL1 may include a plurality of first shells. The second shell SHL2 may include a plurality of second shells. The plurality of first shells and the plurality of second shells may be alternately disposed on the core COR. Any one of the plurality of first shells may be disposed between the core COR and any one of the plurality of second shells.

The first shell SHL1 includes crystalline carbon. The crystalline carbon may include at least one of natural graphite and artificial graphite. That is, the crystalline carbon may be natural graphite, artificial graphite, or a combination thereof. The crystalline carbon may have higher ductility and greater electrical conductivity than amorphous carbon.

The crystalline carbon of the first shell SHL1 may have a D/G value of about 0.2 or less. For example, the crystalline carbon of the first shell SHL1 may have a D/G value of about 0.01 to about 0.2, about 0.01 to about 0.1, or about 0.01 to about 0.06.

The second shell SHL2 includes a second amorphous carbon. The second amorphous carbon may include at least one of hard carbon and soft carbon. The second amorphous carbon is harder than the crystalline carbon and may allow lithium ions to easily move at an interface between a negative electrode active material and an electrolyte solution.

The second amorphous carbon of the second shell SHL2 may have a D/G value of about 0.3 or greater. For example, the second amorphous carbon of the second shell SHL2 may have a D/G value of about 0.3 to about 1.5, about 1.0 to about 1.5, or about 1.0 to about 1.3.

The D/G value of the shell SHL including the first shell SHL1 and the second shell SHL2 is less than the D/G value of the core COR. That is, the D/G value of the entire shell SHL including the first shell SHL1 and the second shell SHL2 may be less than the D/G value of the core COR. For example, the D/G value of the shell SHL including the first shell SHL1 and the second shell SHL2 may be less than about 1.1. That is, the D/G value of the shell SHL containing both the crystalline carbon and the second amorphous carbon may be less than about 1.1. For example, the D/G value of the shell SHL including the first shell SHL1 and the second shell SHL2 may be about 0.07 to about 1.0. The D/G value of the shell SHL including the first shell SHL1 and the second shell SHL2 may be obtained by Raman mapping the entire portion of the shell SHL including the first shell SHL1 and the second shell SHL2.

A ratio of the D/G value of the core COR to the D/G value of the shell SHL including the first shell SHL1 and the second shell SHL2 is about 1.4 to about 15. For example, the ratio of the D/G value of the core COR to the D/G value of the shell SHL including the first shell SHL1 and the second shell SHL2 may be about 1.4 to about 12.

If the D/G value of the shell SHL including the first shell SHL1 and the second shell SHL2, and the ratio of the D/G value of the core COR to the D/G value of the shell SHL including the first shell SHL1 and the second shell SHL2 are in the ranges described above, the negative electrode active material PTC may have improved rollability and electrical conductivity.

Referring to FIG. 8, the shell SHL may further include metal particles MT. The metal particles MT may include a plurality of metal particles. The metal particles MT may be derived from a metal compound added during the preparation of the negative electrode active material PTC. As will be described later with reference to FIGS. 9 to 11, the metal compound may graphitize a hard carbon raw material at a low temperature, thereby preparing the first shell SHL1 containing the crystalline carbon.

The metal particles MT may include at least one metal selected from iron (Fe), nickel (Ni), copper (Cu), magnesium (Mg), and aluminium (Al). The metal particles MT may include at least one of the metal itself, the oxide thereof, and the alloy thereof. The oxide may include at least one of iron oxide, nickel oxide, copper oxide, magnesium oxide, and aluminium oxide. The alloy may include ferrosilicon (FeSi), nickel silicide (NiSi), copper nickel silicon alloy (CuNiSi), aluminium-silicon alloy (AlSi) (e.g., sallumin), aluminium silicon copper alloy (AlSiCu), aluminium silicon magnesium alloy (AlSiMg), and the like. However, embodiments of the present disclosure are not limited to these examples.

For example, the metal particles MT may be identified using electron microscope images. For example, the metal particles MT may be identified through the content of at least one metal among iron (Fe), nickel (Ni), copper (Cu), magnesium (Mg), and aluminium (Al) of the shell SHL using scanning electron microscopy/energy-dispersive X-ray spectrometry (SEM-EDS).

When the metal particles MT includes ferrosilicon, the concentration of iron (Fe) in the metal particles MT may be about 13 at% or less. The concentration of iron (Fe) may be defined as a ratio of the number of iron (Fe) atoms to the total number of silicon (Si) atoms and iron (Fe) atoms in the metal particles MT. For example, the concentration of iron (Fe) in the metal particles MT may be about 2 at% to about 13 at%, about 2 at% to about 10 at%, or about 2 at% to about 5 at%.

The metal particles MT may be mainly distributed in the first shell SHL1 of the shell SHL. That is, the amount of the metal particles MT in the first shell SHL1 may be greater than the amount of the metal particles MT in the second shell SHL2. For example, the first shell SHL1 may contain the metal particles MT, but the second shell SHL2 may contain no metal particles MT.

The metal particles MT may be predominantly distributed in a first shell SHL1' adjacent to the core COR among the plurality of first shells. That is, the amount of the metal particles MT in the first shell SHL1' adjacent to the core COR may be greater than the amount of the metal particles MT in a first shell SHL1" on the second shell SHL2.

A thickness TK1 of the first shell SHL1' adjacent to the core COR may be greater than a thickness TK3 of the first shell SHL1" on the second shell SHL2. In the process of preparing the negative electrode active material PTC, the metal compound may quickly graphitize the hard carbon raw material, and, thus, the first shell SHL1' adjacent to the core COR may be formed first. Thereafter, the remaining metal compounds graphitize the hard carbon raw material, and, thus, the first shell SHL1" on the second shell SHL2, may be formed, with the first shell SHL1" being thinner than the first shell SHL1'.

Referring back to FIG. 7, the core COR and shell SHL of the negative electrode active material PTC may be distinctive according to their respective components, content, D/G value, and the like. For example, the D/G value of the core COR is greater than the D/G value of the shell SHL. The amorphous carbon content of the core COR may be greater than the amorphous carbon content of the shell SHL. The crystalline carbon content of the core COR may be less than the crystalline carbon content of the shell SHL. The content of the metal particles MT in the shell SHL may be greater than the content of the metal particles MT in the core COR.

The negative electrode active material PTC according to embodiments of the present disclosure has the above-described structure and may thereby have the following characteristics.

The negative electrode active material PTC according to embodiments of the present disclosure includes the core COR having excellent hardness and the shell SHL having superior ductility on the core COR. Thus, the negative electrode active material may have improved rollability and not structurally collapse during roll pressing. When the negative electrode active material PTC according to embodiments of the present disclosure is roll pressed, the shape of the shell SHL of the negative electrode active material PTC may be changed, but the shape of the core COR is maintained. That is, in the negative electrode active material PTC according to embodiments of the present disclosure, the deformation of the negative electrode active material PTC particles may be limited to those particles in the shell SHL during the rolling process for preparing a negative electrode. This makes up for the limitations of the core COR containing amorphous carbon, thereby proving a high-density negative electrode plate, preventing electrolyte side reactions, and maintaining pores in the negative electrode active material layer AML2 (see FIG. 6) to allow lithium ions to easily enter and exit. The negative electrode active material PTC may have a pellet density of about 1.2 g/cc to about 4 g/cc, or about 1.2 g/cc to about 2 g/cc. The pellet density may be calculated by placing 0.5 g to 1.0 g of the negative electrode active material into a mold and applying a pressure of 1.0 ton to 2.0 tons for 20 to 30 seconds, while monitoring the thickness change. The negative electrode active material layer AML2 including the negative electrode active material PTC may have a mixture density of about 1.2 g/cc to about 4 g/cc. The negative electrode active material layer AML2 including the negative electrode active material PTC may have a mixture density of about 1.2 g/cc to about 2 g/cc.

In addition, the negative electrode active material PTC according to embodiments of the present disclosure may have improved electrical conductivity. Accordingly, a rechargeable lithium battery including the negative electrode active material PTC according to embodiments of the present disclosure may have improved capacity, efficiency, and quick charging performance. For example, the capacity per weight of the rechargeable lithium battery according to embodiments of the present disclosure may be about 350 mAh/g or greater. The efficiency of the rechargeable lithium battery according to embodiments of the present disclosure may be about 90% or greater. The charging rate and the discharging rate of the rechargeable lithium battery according to embodiments of the present disclosure may be about 60% or greater and about 97% or greater, respectively.

### Method of Preparing Negative Electrode Active Material

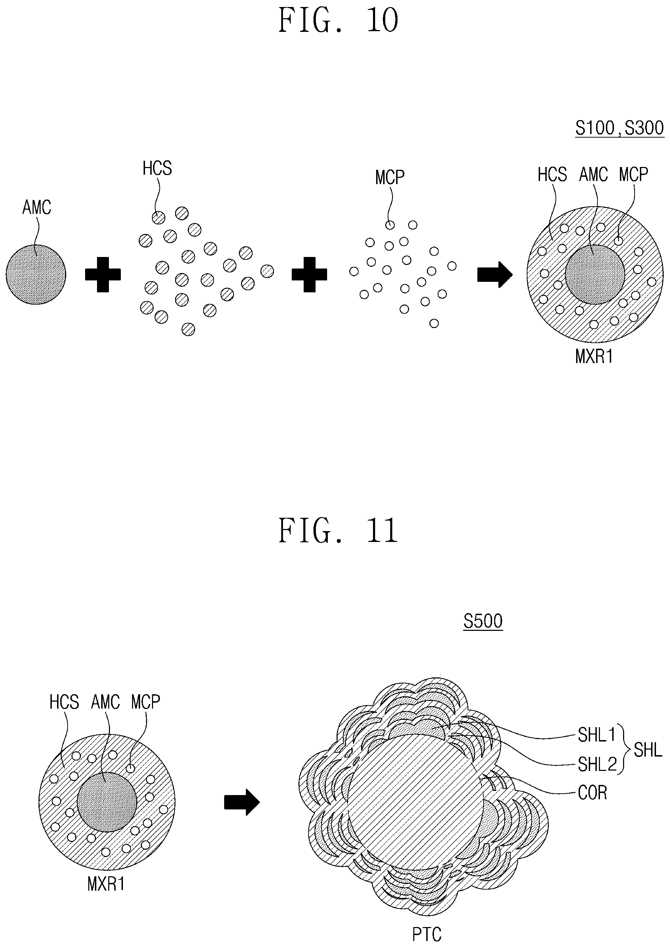

FIG. 9 is a flowchart for describing a method of preparing a negative electrode active material according to embodiments of the present disclosure. FIGS. 10 and 11 are schematic views for describing each process of the method of preparing a negative electrode active material.

Referring to FIG. 9, a method of preparing the negative electrode active material according to embodiments of the present disclosure may include preparing an amorphous carbon (S100), mixing the amorphous carbon, a hard carbon raw material, and a metal compound (S300), and graphitizing the mixture (S500).

Referring to FIG. 10, a prepared amorphous carbon AMC may be mixed with a hard carbon raw material HCS and a metal compound MCP (S100, S300). Accordingly, a mixture MXR1 may include the amorphous carbon AMC and the hard carbon raw material HCS and the metal compound MCP surrounding the amorphous carbon AMC.

The amorphous carbon AMC may include at least one of hard carbon and soft carbon.

The amorphous carbon may be obtained by calcinating hard carbon or soft carbon. The calcination may be performed out at about 3000 °C or lower. For example, the calcination may be performed at about 1000 °C to about 1500 °C.

The hard carbon raw material HCS may include at least one of lignin, phenolic resin, petroleum-based coal tar pitch, and coal-based coal tar pitch.

The amorphous carbon AMC and the hard carbon raw material HCS may be provided at a weight ratio of about 9:1 to about 5:5. For example, the amorphous carbon AMC and the hard carbon raw material HCS may be provided at a weight ratio of about 5:5.

The metal compound MCP may include at least one metal selected from iron (Fe), nickel (Ni), copper (Cu), magnesium (Mg), and aluminium (Al). For example, the metal compound MCP may include at least one of the metal itself, the oxide thereof, and the alloy thereof. The oxide may include at least one of iron oxide, nickel oxide, copper oxide, magnesium oxide, and aluminium oxide. The alloy may include ferrosilicon (FeSi), nickel silicide (NiSi), copper nickel silicon alloy (CuNiSi), aluminium-silicon alloy (AlSi) (e.g., sallumin), aluminium silicon copper alloy (AlSiCu), aluminium silicon magnesium alloy (AlSiMg), and the like. However, the embodiments of the present disclosure are not limited to these examples.

The metal compound MCP and the hard carbon raw material HCS may provided be at a weight ratio of about 40:60 to about 1:99. For example, the metal compound MCP and the hard carbon raw material HCS may be provided at a weight ratio of about 15:85 to about 1:99.

The mixing may be performed using a blender. The blender may be, for example, a planetary centrifugal mixer. The planetary centrifugal mixer may be such that rotation and revolution take place simultaneously without vacuum conditions or under vacuum conditions. The rotation stirring speed and the revolution stirring speed may each independently be about 2000 rpm or less, or about 1000 rpm or less. The planetary centrifugal mixer may include a planetary mixer or a planetary dispenser mixer. By appropriately regulating the revolution stirring speed and the rotation stirring speed, stirring and degassing processes are alternately performed, and the components described above may be uniformly mixed.

The process may include mixing the amorphous carbon AMC, the hard carbon raw material HCS, the metal compound MCP, and a solvent, and evaporating the solvent of the mixture. The solvent may include water. Accordingly, a paste mixture may be prepared.

Referring to FIG. 11, the mixture MXR1 may be graphitized to prepare the negative electrode active material PTC shown in FIG. 7 (S500).

The graphitization may indicate a process of converting a carbonaceous material into graphite. Accordingly, crystalline carbon may be prepared. Typically, the graphitization may require high temperature conditions of about 3000 °C. Above such a temperature, the carbonaceous material and pure silicon (pure Si) may chemically react with each other, and silicon carbide (SiC) may be formed. The silicon carbide (SiC) is an irreversible compound and may not be suitable to be used as a negative electrode in a rechargeable lithium battery.

Metals (iron (Fe), nickel (Ni), copper (Cu), magnesium (Mg), aluminium (Al)) contained in the metal compound MCP may graphitize carbon raw materials at low temperatures. That is, iron (Fe), nickel (Ni), copper (Cu), magnesium (Mg), and aluminium (Al) serve as catalysts and may graphitize hard carbon raw materials at low temperatures. For example, the graphitization may take place at a temperature below about 3000 °C. More specifically, the graphitization may be performed at a temperature of about 1000 °C to about 1500 °C. Thus, crystalline carbon may be prepared even at low temperatures by using a metal compound MCP containing at least one of iron (Fe), nickel (Ni), copper (Cu), magnesium (Mg), and aluminium (Al).

The graphitization may be maintained for 20 minutes to 3 hours in the 1000 °C to about 1500 °C temperature range. That is, the graphitization may include maintaining the temperature at about 1000 °C to about 1500°C for 20 minutes to 3 hours.

The heating rate to the graphitization temperature (about 1000 °C to about 1500 °C) may be about 5 °C/min to about 20 °C/min. For example, the heating time to the graphitization temperature (about 1000 °C to about 1500 °C) may be about 1 hour to about 4 hours. That is, the graphitization may include increasing the temperature to about 1000 °C to about 1500 °C at a heating rate of about 5 °C/min to about 20 °C/min for a heating time of about 1 hour to about 4 hours.

When the heating rate, the heating time, and the graphitization retention time are in the ranges described above, a negative electrode active material having the desired maximum thickness of the shell SHL may be prepared.

The metal compound MCP in the mixture MXR1 may quickly graphitize the hard carbon raw material HCS. Accordingly, the first shell SHL1 containing crystalline carbon on the core COR may be formed. A portion in which the metal compound MCP is present in the mixture MXR1 may form the first shell SHL1. A portion in which the metal compound MCP is not present in the mixture MXR1 may form the second shell SHL2 containing amorphous carbon.

The first shell SHL1 may include a plurality of first shells. The second shell SHL2 may include a plurality of second shells. The plurality of first shells and the plurality of second shells may be alternately disposed. For example, any one of the plurality of first shells may be formed between the core COR and any one of the plurality of second shells.

The first shell SHL1 may include the metal particles MT (see FIG. 8) as well as crystalline carbon. The metal particles MT may be derived from the metal compounds MCP. The metal particles MT may include at least one of iron (Fe), nickel (Ni), copper (Cu), magnesium (Mg), and aluminium (Al).

Hereinafter, the present disclosure will be described in more detail through Examples. However, the Examples are only illustrations for describing the present disclosure, and the scope of the present disclosure is not limited to the Examples.

### Example 1

A negative electrode active material was prepared that had a core-shell structure in which the core included amorphous carbon, and the shell included a first shell containing crystalline carbon and a second shell containing amorphous carbon. A ratio of a D/G value of the core to a D/G value of the entire shell including the first shell and the second shell was 1.92. Raman analysis was conducted using the Raman 2010 Spectra (NT-MDT Development Co.) (Laser system: 473, 633, 785 nm, Lowest Raman shift: ~ 50 cm⁻¹, Spatial resolution: approximately 500 nm). The core had a size of about 4.3 µm. The shell had a thickness of about 2.1 µm. A ratio of the size of the core to the thickness of the shell was approximately 2.0.

An amorphous carbon core (hard carbon) was prepared (S100). The amorphous carbon core, lignin, and iron oxide (Fe₂O₃) were mixed to prepare a mixture (S300). The amorphous carbon core and the lignin were provided at weight ratio of 5:5. The lignin and the iron oxide were provided at weight ratio of 99: 1. The mixing was performed using a high-speed stirrer at 1500 rpm for 1 hour. The mixture was graphitized (S500). The graphitizing was performed in an N₂ atmosphere. First, the temperature was raised to 1200 °C at a heating rate of 10 °C/min for 2 hours, maintained at 1200 °C for 1 hour, and was cooled down to room temperature. A negative electrode active material was thereby obtained.

### Example 2

A negative electrode active material was prepared in the same manner as in Example 1, except that the lignin and the iron oxide were at a weight ratio of 96:4. A ratio of a D/G value of the core to a D/G value of the entire shell including the first shell and the second shell was approximately 5.

### Example 3

A negative electrode active material was prepared in the same manner as in Example 1, except that the lignin and the iron oxide were provided at a weight ratio of 91:9. A ratio of a D/G value of the core to a D/G value of the entire shell including the first shell and the second shell was approximately 10.

### Example 4

A negative electrode active material was prepared in the same manner as in Example 1, except that the lignin and the iron oxide were provided at a weight ratio of 85:15. A ratio of a D/G value of the core to a D/G value of the entire shell including the first shell and the second shell was approximately 15.

### Comparative Example 1

A negative electrode active material in which a ratio of a D/G value of the core to a D/G value of the shell was 0.99 was prepared. The core had a size of about 4.2 µm. The shell had a thickness of about 2.0 µm. A ratio of the size of the core to the thickness of the shell was about 2.1.

The amorphous carbon core (hard carbon) and the lignin were mixed, and the weight ratio of the amorphous carbon core (hard carbon) and the lignin was the same as in Example 1.

### Comparative Example 2

A negative electrode active material in which a ratio of a D/G value of the core to a D/G value of the shell was 18.67 was prepared. The core had a size of about 4.1 µm. The shell had a thickness of about 1.9 µm. A ratio of the size of the core to the thickness of the shell was about 2.2.

The amorphous carbon core (hard carbon) and pitch were mixed, and the weight ratio of the amorphous carbon core (hard carbon) and the pitch was the same as in Example 1. The mixture was graphitized at 3000 °C.

### Preparation of Negative Electrode

98 wt% of the prepared negative electrode active material, 1 wt% of carboxymethyl cellulose, and 1 wt% of styrene-butadiene rubber were mixed in distilled water to prepare a slurry. The slurry was applied to Cu foil, dried, and roll pressed to prepare a negative electrode.

### Preparation of Rechargeable Lithium Battery

96 wt% of LiCoO₂, 2 wt% of polyvinylidene fluoride (PVdF), and 2 wt% of carbon black were mixed in N-methylpyrrolidone, and then applied to Al foil, dried, and roll pressed to prepare a positive electrode.

A rechargeable lithium battery was prepared using the negative electrode and the positive electrode, a separator made of polyethylene, and an electrolyte solution. For the electrolyte solution, 1.5 M LiPF₆ was dissolved in an organic solvent where ethylene carbonate (EC), diethyl carbonate (DEC), and dimethyl carbonate (DMC) were mixed in a volume ratio of 2:1:7, and 3 parts by weight of fluoroethylene carbonate (FEC) was added with respect to 100 parts by weight of the organic solvent.

### Evaluation Example 1: Analysis of Negative Electrode Active Material

The structure and components of the negative electrode active material of the Examples and the Comparative Examples were analyzed. From SEM images, component analysis, and Raman spectrum results of the negative electrode active materials of the Examples and the Comparative Examples, the size of the core, the thickness of the shell, the D/G value of the core, and the D/G value of the shell were obtained. For the component analysis, measuring was performed using an energy dispersive X-ray analyzer (EDX). The Raman spectrum was obtained using a Raman spectrophotometer (NRS-1000, Nippon Spectrometer Co., Ltd.). The results are shown in Table 1.

**Table 1**

| Item | D/G value of shell | D/G value of core | Ratio of D/G value of core to D/G value of shell |
|---|---|---|---|
| Example 1 | 0.59 | 1.13 | 1.92 |
| Example 2 | 0.23 | 1.12 | 4.87 |
| Example 3 | 0.11 | 1.14 | 10.36 |
| Example 4 | 0.08 | 1.15 | 14.38 |
| Comparative Example 1 | 1.15 | 1.14 | 0.99 |
| Comparative Example 2 | 0.06 | 1.12 | 18.67 |

Referring to Table 1, the negative electrode active materials of the Examples 1 to 4 had a structure including a core and a shell. The core included amorphous carbon and the shell included a first shell containing crystalline carbon and a second shell containing amorphous carbon. The first shell included a plurality of first shells, and the second shell included a plurality of second shells, and the plurality of first shells and the plurality of second shells were alternately disposed. Unlike the negative electrode active materials of the Comparative Examples 1 and 2, the shells of the negative electrode active materials of the Examples 1 to 4 further contained iron (Fe), and the content of iron (Fe) in the negative electrode active materials was about 4 at%.

### Evaluation Example 2: Evaluation of Rollability

The rollability of the negative electrode active materials of the Examples and the Comparative Examples was evaluated. The pellet density of the negative electrode active materials, the mixture density of the negative electrode active material layers, and the wetting time of the electrolyte solutions are shown in Table 2. The wetting time of the electrolyte solutions was measured by preparing a negative electrode having a mixture density of 1.7 g/cc and measuring the time for 30 µl of electrolyte solution (1.15 M LiPF₆, EC/DEC/DMC=3/5/2) to be completely wetted in the negative electrode.

**Table 2**

| Item | Pellet density (g/cc, 1.54 Kbar) | Mixture density (g/cc, 1.54 Kbar) | Wetting time of electrolyte solution (s) |
|---|---|---|---|
| Example 1 | 1.68 | 1.72 | 43 |
| Example 2 | 1.69 | 1.74 | 45 |
| Example 3 | 1.68 | 1.73 | 43 |
| Example 4 | 1.70 | 1.75 | 45 |
| Comparative Example 1 | 0.98 | 0.99 | Unable to obtain mixture |
| Comparative Example 2 | 1.69 | 1.73 | 45 |

Referring to Table 2, compared to the negative electrode active materials of Comparative Examples 1 and 2, the negative electrode active materials of Examples 1 to 4 had excellent pellet density and mixture density. In addition, in the negative electrode active materials of the Examples 1 to 4, due to low deformation of the negative electrode active material during roll pressing, pores were maintained in the negative electrode active material layer. Accordingly, the wetting time of the electrolyte solution was kept short. It was thereby determined that a movement path of Li ions was maintained in the negative electrodes containing the negative electrode active materials of the Examples 1 to 4.

### Evaluation Example 3: Evaluation of Battery Properties

Characteristics of rechargeable lithium batteries prepared using negative electrode active materials of the Examples and Comparative Examples were evaluated.

For initial charging/discharging, the rechargeable lithium batteries were initially charged at a constant current of 0.2 C, and after 10 minutes of rest, discharged up to 2.5 V at a constant current of 0.2 C. The initial discharge capacity was divided by the weight of the negative electrode active material to evaluate capacity per weight. Efficiency was evaluated based on initial discharge capacity relative to initial charge capacity. The charging rate was evaluated based on a ratio of the charging capacity measured by charging at 2.0 C and the charging capacity at 0.2 C. The discharge rate was evaluated based on a ratio of the discharging capacity at 0.2 C and the discharging capacity at 3 C after recharging. The results of the battery property evaluations are shown in Table 3.

**Table 3**

| Item | Capacity per weight (mAh/g) | Efficiency (%) | Charge rate (2 C/0.2 C %) | Discharge rate (3 C/0.2 C %) |
|---|---|---|---|---|
| Example 1 | 351 | 92 | 62 | 98 |
| Example 2 | 350 | 92 | 61 | 98 |
| Example 3 | 351 | 92 | 62 | 99 |
| Example 4 | 349 | 92 | 60 | 98 |
| Comparative Example 1 | 283 | 68 | 64 | 72 |
| Comparative Example 2 | 352 | 92 | 48 | 97 |

Referring to Table 3, it was determined that rechargeable lithium batteries including the negative electrode active materials of the Examples 1 to 4 had excellent capacity per weight, efficiency, charge rate, and discharge rate.

A negative electrode active material according to an embodiment of the present disclosure may be used to produce a high-density negative electrode plate while having a structure that is maintained when roll pressed. Accordingly, electrolyte side reactions may be prevented, and pores in a negative electrode active material layer may be maintained such that lithium ions may easily enter and exit.

A negative electrode according to embodiments of the present disclosure may have excellent mixture density.

A rechargeable lithium battery according to embodiments of the present disclosure may have excellent capacity, efficiency, and quick charging performance.

A method of preparing a negative electrode active material according to embodiments of the present disclosure may produce a negative electrode active material having the above-described characteristics.

Although the embodiments of the present disclosure have been described above with reference to the accompanying drawings, the present disclosure may be applied in other specific forms without changing the technical ideas or essential features. Therefore, embodiments described herein are presented as examples in all respects and not restrictive.

## Claims

1. A negative electrode active material comprising:
a core including a first amorphous carbon; and
a shell on the core, the shell including a first shell on the core, with the first shell including a crystalline carbon, and a second shell on the first shell, with the second shell including a second amorphous carbon,
wherein a ratio of a D/G value of the core to a D/G value of the shell including the first shell and the second shell is about 1.4 to about 15.

2. The negative electrode active material of claim 1, wherein the core has a D/G value of about 1.1 or greater.

3. The negative electrode active material of claim 1 or claim 2, wherein the core has an average diameter of about 500 nm to about 20 µm.

4. The negative electrode active material of any one of claims 1 to 3, wherein the first amorphous carbon comprises at least one of a non-graphitizable carbon (hard carbon) and a graphitizable carbon (soft carbon).

5. The negative electrode active material of any one of claims 1 to 4, wherein the shell including the first shell and the second shell has a D/G value of less than about 1.1.

6. The negative electrode active material of claim 5, wherein the first shell has a D/G value of about 0.2 or less.

7. The negative electrode active material of claim 5, wherein the second shell has a D/G value of about 0.3 or greater.

8. The negative electrode active material of any one of claims 1 to 7, wherein the first shell comprises a plurality of first shells, the second shell comprises a plurality of second shells, and the plurality of first shells and the plurality of second shells are alternately disposed on the core.

9. The negative electrode active material of any one of claims 1 to 8, wherein the shell further comprises metal particles, and
wherein the metal particles comprise at least one of iron (Fe), nickel (Ni), copper (Cu), magnesium (Mg), and aluminium (Al).

10. The negative electrode active material of any one of claims 1 to 9, wherein the shell has a thickness of about 500 nm to about 5 µm.

11. The negative electrode active material of any one of claims 1 to 10, wherein a ratio of the size of the core to the thickness of the shell is about 1 to about 3.

12. The negative electrode active material of any one of claims 1 to 11, wherein the crystalline carbon comprises at least one of natural graphite and artificial graphite.

13. The negative electrode active material of any one of claims 1 to 12, wherein the second amorphous carbon comprises at least one of a non-graphitizable carbon (hard carbon) and a graphitizable carbon (soft carbon).

14. The negative electrode active material of any one of claims 1 to 13, wherein the negative electrode active material layer has a pellet density of about 1.2 g/cc to about 4 g/cc.

15. A method of preparing a negative electrode active material, the method comprising:
preparing amorphous carbon;
mixing the amorphous carbon, a hard carbon raw material, and a metal compound to prepare a mixture; and
graphitizing the mixture at about 1000 °C to about 1500 °C.
